# DEMANDE DE BREVET EUROPEEN

(11) **EP 2 034 209 A1**
(43) Date de publication de la demande: **11.03.2009**
(21) Numéro de dépôt: 08162975.0
(22) Date de dépôt: 26.08.2008
(51) Int. Cl.: F16D 55/2265, F16C 33/04

(54) **Coussinet élastique pour frein à disque**

(30) Priorité: 29.08.2007 FR 0706097
(71) Demandeur: Robert Bosch GmbH, 70442 Stuttgart (DE)
(72) Inventeur: Nocera, Pascal, 78400 Chatou (FR); Boisseau, Jean-Pierre, 75014 Paris (FR)
(74) Mandataire: Hurwic, Aleksander Wiktor

(57) **Abrégé**

L'invention concerne un coussinet pour guidage axial d'une tige (2) d'un premier diamètre (Φ1) dans un alésage d'un deuxième diamètre (Φ2). Ce coussinet comporte un anneau élastique (1) de forme générale polygonale dont la section droite est un polygone convexe inscriptible dans un premier cercle (3) de diamètre équivalent au deuxième diamètre (Φ2) et un deuxième cercle (2) de diamètre équivalent au premier diamètre (Φ1) étant inscriptible dans ledit polygone.

## Description

L'invention concerne un coussinet élastique pour le coulissement axial d'une tige dans un alésage.

L'invention concerne plus particulièrement son application à un frein à disque pour le coulissement d'un étrier par rapport à la chape d'un frein à disque.

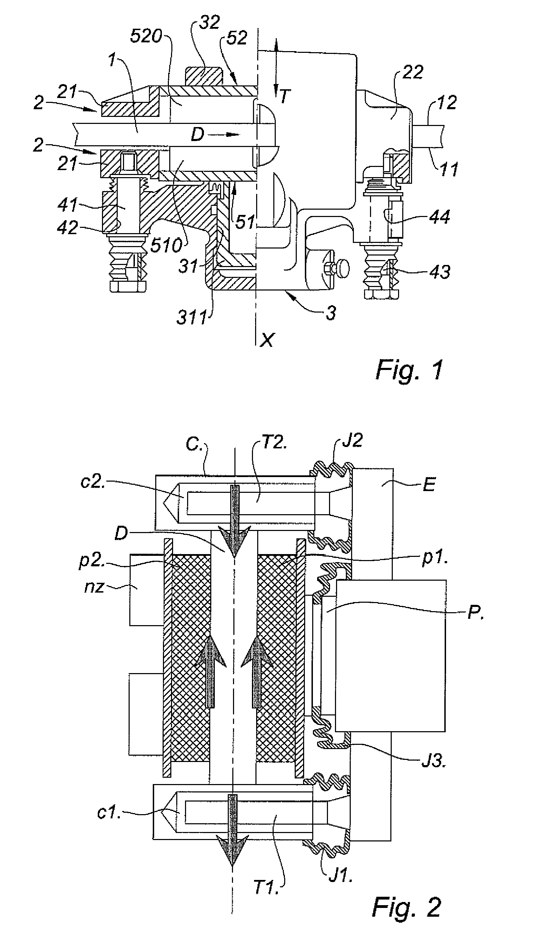

Un frein à disque, tel que représenté en figure 1, est destiné à être placé de part et d'autre d'un disque 1 présentant une face plane interne 11 et une face plane externe 12. Ce disque est solidaire en rotation d'un essieu de roue du véhicule et, lors d'un freinage, le frein à disque doit venir enserrer les deux faces du disque. Un tel frein à disque comporte, de façon générale, une chape 2 qui est destinée à chevaucher le disque et qui est fixée au véhicule du côté de la face interne 11 du disque. La chape comporte de chaque côté du disque un logement interne et un logement externe. Ces logements sont destinés à recevoir des extrémités d'un support de plaquettes de freins interne 51 et d'un support de plaquette de frein externe 52 situés de part et d'autre du disque. Ces supports de plaquettes de freins sont équipés de plaquettes de frein 510 et 520. Ils coulissent dans les logements de la chape.

Un étrier 3 est destiné à chevaucher le disque et est monté mobile par rapport à la chape et au disque selon une direction perpendiculaire au plan du disque (voir flèche T de la figure 1a).

Cette mobilité de l'étrier lui permet d'exercer (à l'aide de la pièce 32) un effort de freinage sur le support de plaquette de frein externe 52 selon une direction perpendiculaire au plan du disque tandis qu'il exerce un effort de freinage sur le support de plaquette de frein interne 51 (à l'aide d'un piston 31) . Ce fonctionnement est bien connu dans la technique.

La mobilité de l'étrier par rapport à la chape nécessite des moyens de guidage prévus sur la chape et sur l'étrier permettant de faire coulisser l'étrier par rapport à la chape.

Selon l'exemple de réalisation de la figure 1, la chape 2 possède des tiges 41 et 43 que nous appellerons colonnettes dans la suite de la description. L'étrier 3 possède des trous 42 et 44 qui permettent un coulissement axial de l'étrier sur les colonnettes 41 et 43. Ce coulissement doit se faire avec le minimum de frottement que ce soit lors de l'actionnement de l'étrier (lors d'un freinage) que lors du retour au repos de l'étrier. Par surcroît, le jeu entre les colonnettes et les trous de l'étrier doit être minimum pour assurer un guidage le meilleur possible de l'étrier.

La figure 2 représente un autre type de frein auquel s'applique l'invention. Dans ce type de frein, l'étrier E possède deux colonnettes T1 et T2 qui coulissent dans deux trous c1 et c2 de la chape C. L'agencement de la chape C, de l'étrier E, des plaquettes de freins p1 et p2 de part et d'autre du disque de freinage D est similaire à l'agencement du système de freinage décrit précédemment. Le fonctionnement de ce système de freinage est similaire à celui décrit précédemment. C'est-à-dire que lors d'une commande de freinage, l'étrier se déplace par rapport à la chape et les colonnettes doivent coulisser dans les trous c1 et c2 de la chape avec, comme précédemment le minimum de frottement et le minimum de jeu entre les colonnettes et les trous dans lesquels elles coulissent.

De plus, il convient que le coulissement de l'étrier par rapport à la chape se fasse sans bruit qui serait en principe perceptible par les usagers du véhicule sur lequel est monté un tel type de frein. C'est pourquoi, une solution connue, outre une lubrification, est de prévoir entre les colonnettes et les trous des coussinets en caoutchouc ou matériau analogue. L'inconvénient d'une telle disposition est, qu'à l'usage, le caoutchouc s'écrase et les colonnettes finissent par atteindre les parois des trous. Les colonnettes en frottant contre les parois des trous provoquent un bruit perceptible par les usagers du véhicule et peuvent marquer mécaniquement les alésages des trous.

L'invention concerne une disposition permettant de résoudre ces problèmes.

L'invention concerne donc un coussinet pour guidage d'une tige dans un alésage destiné au guidage d'une tige d'un premier diamètre dans un alésage d'un deuxième diamètre. Ce coussinet comporte un anneau élastique de forme générale polygonale dont la section droite est un polygone convexe inscriptible dans un premier cercle de diamètre équivalent au deuxième diamètre.

Avantageusement, un deuxième cercle de diamètre inférieur ou égal au premier diamètre est inscriptible dans ledit polygone.

Selon une forme de réalisation préférée de l'invention, chaque côté de l'anneau a une forme cintrée. La face bombée de chaque côté est alors dirigée vers la zone centrale de la forme générale polygonale.

Dans ce cas, on prévoit de préférence que le deuxième cercle est inscriptible dans l'espace central du coussinet laissé libre par lesdites faces bombées.

Egalement, on prévoira avantageusement que les sommets de la forme polygonale sont de forme arrondie.

Selon une forme de réalisation, l'anneau comporte une interruption qui donne un degré de liberté d'élasticité au coussinet.

Dans le cadre de l'invention, l'anneau est de préférence en matériau non compressible.

Selon une variante de réalisation de l'invention, le coussinet comporte un épaulement situé à l'intérieur du coussinet selon un plan perpendiculaire aux parois du coussinet.

L'invention concerne également une application du coussinet ainsi décrit à un frein à disque comportant un étrier mobile par rapport à une chape, la chape comportant au moins une colonnette qui coulisse dans un alésage de l'étrier. Il est alors prévu un coussinet entre l'alésage et la colonnette.

De même si c'est l'étrier qui comporte une colonnette qui coulisse dans un alésage de la chape, le frein à disque comportera également un coussinet entre l'alésage et la colonnette.

Selon une variante de réalisation, la colonnette comporte une rainure circulaire. Le coussinet est alors monté autour de la colonnette avec ledit épaulement du coussinet placé dans la rainure circulaire.

Selon une variante de réalisation la colonnette comporte une rainure circulaire dont la largeur est supérieure à la longueur axiale du coussinet. Le coussinet est alors monté entièrement dans ladite rainure circulaire autour de la colonnette.

Les différents objets et caractéristiques de l'invention apparaîtront plus clairement dans la description qui va suivre ainsi que dans les figures annexées qui représentent:
- les figures 1 et 2, des exemples de freins à disques connus dans la technique et déjà décrits précédemment,
- la figure 3, une vue en bout d'un exemple de réalisation d'un coussinet selon l'invention,
- les figures 4a et 4b, une vue en coupe longitudinale et une vue en bout d'une variante de réalisation d'un coussinet selon l'invention,
- la figure 4c, une vue en coupe d'un montage du coussinet des figures 4a et 4b sur une tige,
- la figure 4d, une vue en coupe d'une variante de réalisation dans laquelle le coussinet est placé dans une rainure d'une tige,
- les figures 5a et 5b, des vues en perspectives d'un exemple de réalisation d'un coussinet selon l'invention.

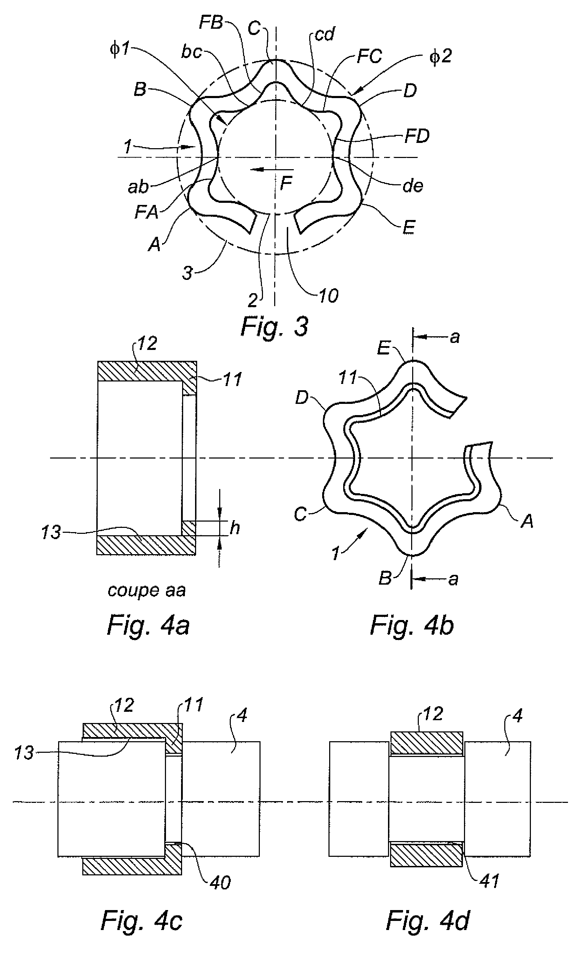

En se reportant à la figure 3, on va donc décrire un exemple de réalisation d'un coussinet selon l'invention.

Le coussinet 1 a une forme générale polygonale. La section droite de ce coussinet représentée en figure 3 présente un pourtour extérieur inscriptible dans un cercle 3 de diamètre Φ2. Les points de contact A à E de ce pourtour extérieur avec le cercle 3 peuvent être considérés comme les sommets d'un polygone convexe c'est-à-dire d'un polygone tout entier situé d'un même côté de toute droite portant l'un de ses côtés. Les côtés du coussinet ont une forme cintrée de telle façon que les faces intérieures FA à FD du coussinet ont une forme convexe avec leur partie bombée dirigée vers le centre du coussinet. Les faces intérieures FA à FD présentent alors chacune un point ab à de situé sur un cercle 2 de diamètre Φ1.

Dans une application où le cercle 3 représente la section droite d'un alésage et où le cercle 2 représente la section droite d'une tige cylindrique, on voit donc que la tige sera guidée à l'intérieur de l'alésage par le coussinet 2. Les points de frottement de la tige lors de son guidage seront réduits au nombre de points de contacts tels que ab à de existant entre le coussinet et la tige.

Le coussinet est en matériau déformable élastiquement mais non compressible ; il peut donc se déformer radialement sous l'action d'un effort de déplacement radial de la tige. Si la tige a tendance à se déplacer radialement, par exemple selon le sens de la flèche F, elle va exercer un effort de compression au point ab de la face FA du coussinet. Les points A et B de la surface extérieure du coussinet vont avoir tendance à s'écarter l'un de l'autre et à glisser sur la surface de l'alésage représenté par le cercle 3. Cependant, les frottements des points de contacts A et B du coussinet sur la surface intérieur de l'alésage vont contrarier le glissement des points de contact du coussinet dans l'alésage. Le déplacement radial de la tige représentée par le cercle 2 sur la figure 3 sera donc amorti par la déformation du coussinet et par le glissement des points de contact du coussinet dans l'alésage.

On a donc un système qui permet un centrage d'une tige dans un alésage et son guidage axial avec un frottement réduit.

Selon l'exemple de réalisation de la figure 3, le palier comporte une interruption référencée 10 sur la figure. Cette interruption permet d'augmenter les possibilités de déformations élastiques du coussinet. Les portions de coussinet situées entre les points A et B et l'interruption 10 peuvent participer à la fonction de guidage du coussinet selon le nombre de côtés que possède le coussinet. De plus, le fait de prévoir une interruption dans le coussinet permet de compenser les différences de diamètres dues aux tolérances de fabrication.

De plus, le coussinet ayant la possibilité de se déformer de façon élastique, au repos, lorsqu'il n'est pas monté sur une tige que l'on doit centrer dans un alésage, son diamètre intérieur peut être inférieur au diamètre de la tige.

Pour le montage de ce coussinet sur la tige, on écartera alors les deux extrémités du coussinet situées de part et d'autre de l'interruption 10 de façon que le diamètre intérieur du coussinet soit supérieur (ou sensiblement égal) au diamètre du coussinet.

On voit donc qu'à l'état de repos, lorsqu'il n'est pas monté sur la tige, le coussinet doit être tel qu'un cercle de diamètre inférieur ou égal à celui de la tige soit inscriptible dans l'espace laissé libre par les faces bombées FA à FD du coussinet.

Le coussinet est de préférence en matériau élastique non compressible pour que la tige guidée ne touche pas l'alésage. Par exemple, il peut être en matériau plastique. Il présentera alors les avantages:
- de permettre un bon guidage de la tige,
- d'éviter tout graissage de l'assemblage guide-alésage,
- d'offrir un guidage non bruyant,
- d'avoir une usure lente dans le temps.

Selon une variante de réalisation de l'invention le coussinet comporte un épaulement 11 situé, par exemple, à une extrémité de la paroi 13 du coussinet 12 sur la face intérieure du coussinet. Cet épaulement est destiné à immobiliser axialement le coussinet sur la tige sur laquelle il est monté. Un tel coussinet est représenté en vue de face par la figure 4b et en coupe par la figure 4a.

La figure 4c représente ce coussinet monté sur une tige 4. La tige 4 comporte une rainure 40 de dimensions (largeur et profondeur) légèrement supérieures aux dimensions (largeur et hauteur) de l'épaulement 11 du coussinet. Lorsque le coussinet est monté sur la tige 4, l'épaulement 11 du coussinet est placé dans la rainure 40 comme cela est représenté sur la figure 4c. Le coussinet ne peut donc pas se déplacer axialement le long de la tige 4.

La hauteur h de l'épaulement 11 sera choisie de façon à ne pas nuire à l'élasticité du coussinet.

En application de l'invention au montage d'un étrier sur une chape tel que le montage de la figure 1, la tige 4 de la figure 4c représente, par exemple, l'axe de montage 41 de la figure 1 ou l'une des colonnettes T1 ou T2 de la figure 2.

La figure 4d représente une variante de réalisation dans laquelle le coussinet ne comporte pas d'épaulement et dans laquelle la largeur de la rainure 41 de la tige 4 est légèrement supérieure à la longueur axiale du coussinet 12. Le coussinet est alors monté entièrement dans la rainure 41.

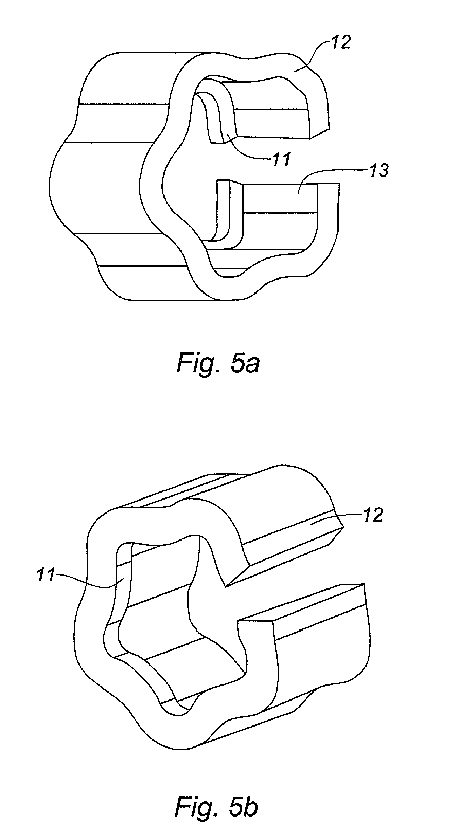

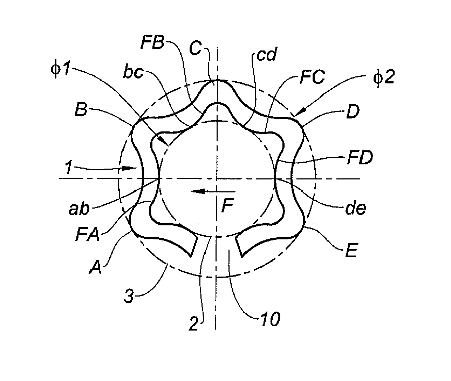

Les figures 5a et 5b représentent des vues en perspectives d'un coussinet muni d'un épaulement 11 tel que celui des figures 4a et 4b.

On notera de plus que l'interruption 10 de la paroi 12 du coussinet permettra la mise en place du coussinet sur la tige 4 (avec l'épaulement 11 dans la rainure 40) en écartant les deux extrémités du coussinet situées de part et d'autre de l'interruption 10.

De manière avantageuse, la courbure des portions FA à FD pourra être égale à la courbure des sommets A à D.

## Revendications

1. Coussinet pour guidage axial d'une tige dans un alésage destiné au guidage d'une tige (2) d'un premier diamètre (Φ1) dans un alésage (3) d'un deuxième diamètre (Φ2), **caractérisé en ce qu'**il comporte un anneau élastique (1) qui comporte une interruption (10) et un épaulement (11) situé à l'intérieur du coussinet selon un plan perpendiculaire aux parois (12) du coussinet et que le coussinet est monté avec ledit épaulement (11) placé dans ladite rainure circulaire (40) de forme générale polygonale dont la section droite est un polygone convexe inscriptible dans un premier cercle (3) de diamètre équivalent au deuxième diamètre (Φ2), et que chaque côté (AB à DE) de l'anneau (1) a une forme cintrée, la face bombée (FA à FD) de chaque côté étant dirigée vers la zone centrale de la forme générale polygonale.

2. Coussinet selon la revendication 1, **caractérisé en ce que** un deuxième cercle (2) de diamètre égal ou inférieur au premier diamètre (Φ1) est inscriptible dans ledit polygone.

3. Coussinet selon la revendication 1, **caractérisé en ce que** les sommets (A à E) sont de forme arrondie.

4. Coussinet selon la revendication 3, **caractérisé en ce que** ledit anneau est en matériau non compressible.

5. Application du coussinet selon l'une quelconque des revendications précédentes à un frein à disque comportant un étrier mobile par rapport à une chape, la chape (ou l'étrier) comportant au moins une colonnette (T1, T2) qui coulisse dans un alésage (c1, c2) de l'étrier (ou de la chape respectivement), **caractérisé en ce qu'**il est prévu un coussinet (12) selon l'une quelconque des revendications précédentes entre l'alésage (c1, c2) et la colonnette (T1, T2).

6. Application du coussinet selon la revendication **5, caractérisé en ce que** ledit coussinet (12) est monté autour de la colonnette (T1, T2).

7. Application du coussinet selon la revendication **6, caractérisé en ce que** la colonnette comporte une rainure circulaire (41) dont la largeur est supérieure à la longueur axiale du coussinet (12), le coussinet étant monté autour de la colonnette dans ladite rainure circulaire (40).
